# EUROPEAN PATENT APPLICATION

(11) **EP 4 407 073 A1**
(43) Date of publication of application: **31.07.2024**
(21) Application number: 23153611.1
(22) Date of filing: 27.01.2023
(51) Int. Cl.: C25C 3/08, C04B 35/58

(54) **CATHODE COMPONENT FOR AN ELECTROLYTIC ALUMINIUM PRODUCTION CELL**

(71) Applicant: VSCA AS, 1394 Nesbru (NO)
(72) Inventor: Jarvis, David, 1394 Nesbru (NO); Jarvis, Rosanna, 1394 Nesbru (NO)
(74) Representative: AWA Sweden AB

(57) **Abstract**

The present disclosure relates to a cathode component for an electrolytic aluminium production cell, the cathode component comprising a composite material comprising agglomerates, forming a matrix, and aluminium, wherein the agglomerates comprise particulates of titanium diboride (TiB₂) and particulates of aluminium nitride (AIN), the composite material further comprising pores such to allow the cathode component to be infiltrated by molten aluminium, e.g. prior to or during its use in said electrolytic aluminium production cell. This provides a cathode component that is wettable by molten aluminium. The present disclosure also relates to an electrolytic aluminium production cell comprising the cathode component, and to a method for producing the cathode component.

## Description

### Technical field

The present disclosure relates to a cathode component for an electrolytic aluminium production cell, an electrolytic aluminium production cell comprising such a cathode component, and to a method for producing a cathode component for an electrolytic aluminium production cell.

### Background

Aluminium is one of the most important metals in today's industries where it is often used as a light weight construction material. Aluminium is produced from alumina via an energy intensive electrolytic reduction process known as the Hall-Héroult process, wherein alumina, Al₂O₃, is reduced to pure Al. Given this energy intensive process, 20-40% of the cost of producing aluminium is associated with electricity costs. Consequently, the environmental impact of aluminium production is substantial as carbon based electricity sources are often used.

Conventionally, the Hall-Héroult process involves anodes and cathodes made out of graphite. Graphite is chosen as anode and cathode materials as it is resistant to fluoride corrosion. In aluminium electrolysis today, one of the main challenges is to reduce the distance between the anode and the cathode, in order to decrease electrical resistance and thus electricity costs. Currently the distance between the aluminium pad and the anode block is about 5-10 cm. This distance is deliberately increased for safety reasons, to avoid magneto-hydrodynamic movement and sloshing of the liquid aluminium, and to reduce the risk of short-circuiting. This problem is compounded by the fact that conventional graphite cathodes have very poor wettability towards liquid aluminium. If a material can be found that is more wettable towards aluminium than graphite, while still being chemically inert and electrically conductive, this would allow the anode-cathode distance to be reduced.

Titanium diboride (TiB₂) components or graphite cathodes coated with TiB₂ have been identified as promising solutions for cathodes in the Hall-Héroult process. This is due to the high wettability towards liquid aluminium, elevated resistance to oxidation at elevated temperatures and resistance to corrsoion from cryolite melts, and good electrical conductivity of TiB₂. TiB₂ has poor sinterability, however, making it complex and costly to fabricate components with dense and large sizes. A problem with TiB₂ coated graphite cathodes is that the difference in thermal expansion of TiB₂ and the graphite substrate may lead to microcracking, which in turn reduces the performance of the cathode.

Hence there is a need for an improved cathode material that offers the right balance of the above mentioned properties, and which can be produced in a variety of shapes and dimensions.

### Summary

It is an object to mitigate, alleviate or eliminate one or more of the above-identified deficiencies in the art and disadvantages singly or in any combination and to solve at least the above mentioned problem. According to a first aspect there is provided a cathode component for an electrolytic aluminium production cell, the cathode component comprising a composite material. The composite material comprises agglomerates, forming a matrix, and aluminium, wherein the agglomerates comprise particulates of titanium diboride (TiB₂) and particulates of aluminium nitride (AIN). The composite material further comprises pores such to allow the cathode component to be infiltrated by molten aluminium, e.g. prior to or during its use in the electrolytic aluminium production cell.

The cathode component of the present disclosure provides a combination of porperties that makes it suitable for use as a cathode component in the Hall-Héroult process. The present disclosure is based on the realization that by providing a cathode component comprising a composite material comprising aluminium and a matrix formed of agglomerates of particulates of TiB2 and AIN, which composite material further comprises pores, a material suitable for use in an electrolytic aluminium production cell is provided that allows for the distance between the anode and cathode in for example the Hall-Héroult process to be reduced. This is advantageous in that it reduces energy consumption of the production cell and thereby the cost of the electrowinning process.

The composite material comprises agglomerates forming a matrix, the agglomerates comprising TiB₂ and AIN particulates. Both TiB₂ and AIN are known for being chemically inert in cryolite-alumina solutions at elevated temperatures while also resulting in low contact angles when in contact with molten aluminum, i.e. they are both regarded as having good wettability towards molten aluminium. While AIN is not known for a satisfactory electical conductivity, it was found by the inventors that when in union with TiB₂ as in the present disclosure, the cathode component still provides a satisfactory electrical conductivity. This is partly due to the network of connected TiB₂ particles which together with the AIN particulates form the matrix, and to the excess metallic aluminium of the composite material. Furthermore, due to the pores of the composite material, the cathode component may be infiltrated by molten aluminium, prior to use or when used in an electrolytic aluminium production cell, providing further conductive pathways for electrons to flow through the cathode component during the electrowining.

According to some embodiments, the particulates of TiB₂ and the particulates of AIN are in intimate contact. The intimate contact, or union, of the TiB₂ and AIN particulates provides structural integrity to the cathode component. The AIN particulates can be said to act as a binder, holding the TiB₂ particulates together, in so forming the matrix.

According to an embodiment, the composite material comprises (in wt% of said composite material) TiB₂ in an amount of 50-75 wt%, preferably of 68 wt%, AIN in an amount of 15-40 wt%, preferably of 26 wt%, and aluminium in an amount of 2-10 wt%, preferably of 6 wt%. The composite material further comprises inevitable impurities, such as of Zr and Hf. Such impurities have been observed to form solid solutions of diboride (Ti, Zr, Hf)B₂, actually leading to higher stability of the composite material relative to pure TiB₂ because of the entropy of the composite material being increased.

According to some embodiments, the composite material further comprises vanadium, wherein the vanadium is dissolved into the particulates of TiB₂ or present as particulates of vanadium diboride (VB₂) in intimate contact with the particulates of AIN.

The inventors surprisingly found that the alloy Ti-6AI-4V (Ti64) may be used to provide the titanium for the TiB₂ particulates of the cathode component, without prejudicing the properties of the cathode component despite the presence of vanadium therein. It has been observed that the vanadium content of the Ti64 alloy is soluble within the TiB₂ particulates of the composite material and no distinct VB₂ phase is formed within the cathode component that is leached out when the cathode component is used in an electrolytic aluminium production cell. Furthermore, it has been observed by the inventors that the presence of vanadium in the composite material actually leads to higher stability and inertness because it provides an increased entropy of the material relative to pure TiB₂.

Using Ti64 to produce the cathode component, thus further comprising vanadium, is further advantageous in that Ti64 is widely available in the industry today due to the evolving 3D printing technology which uses this alloy to a large extent. For 3D printing, strict rules apply for oxygen content of the Ti64 powder which imposes a certain shelf-life and restricts recyclability of Ti64 for the 3D printing process. Such restrictions of the oxygen content do not apply to the production of the cathode component, whereby Ti64 powder considered unusable for the 3D printing technology may be used for the production of the cathode component. The cathode component can thus be made from low-cost starting material, which is advantageous.

According to some embodiments, the cathode component comprises (in wt% of said composite material) TiB₂ in an amount of 50-75 wt%, preferably of 65 wt%, VB₂ in an amount of 1-5 wt%, preferably of 3 wt%, AIN in an amount of 15-40 wt%, preferably of 26 wt%, and aluminium in an amount of 2-10 wt%, preferably of 6 wt%. The composite material further comprises inevitable impurities, such as of Zr and Hf. As previously stated, such impurities and the vanadium have been observed to form solid solutions of diboride (Ti, Zr, Hf, V)B₂, actually leading to higher stability of the composite material relative to pure TiB₂ because of the entropy of the composite material being increased.

According to some embodiments, the particulates have a crystallite size of 0.1- 20 µm, preferably 0.5-5 µm. Providing particulates having a crystallite size within this range is advantageous in that it provides increased wettability and strength to the composite material.

According to some embodiments, the composite material of the cathode component has, at a temperature of 800-1000 °C, a density of from 2 g/cm³, preferably of around 2-2.8 g/cm³, more preferably around 2.3-2.5 g/cm³. As liquid aluminium penetrates and infiltrates the pores of the composite material during use of the cathode component in an electrolytic aluminium production cell, the density of the cathode component, then comprising the composite material and the infiltrated aluminium, is higher than that of the composite material prior to use.

According to some embodiments, the composite material of the cathode component has, at a temperature of 800-1000 °C, an electrical conductivity of from 10⁵ S/m. According to some embodiments, the composite material of the cathode component has, at a temperature of 800-1000 °C, a thermal conductivity of from 25 W/mK. According to some embodiments, the composite material of the cathode component has, at a temperature of 800-1000 °C, a degradation rate in liquid aluminium of less than 5 mm/year. According to some embodiments, the composite material of the cathode component has, at a temperature of 800-1000 °C, a contact angle with liquid aluminium of less than 90 °. According to some embodiments, the composite material of the cathode component has, at a temperature of 800-1000 °C, a solubility in liquid aluminium of less than 0.05 wt% Ti. According to some embodiments, the composite material of the cathode component has, at a temperature of 800-1000 °C, a hardness of from 300 HV.

Thus, the cathode component comprising the composite material provides a combination of properties that makes it suitable for use as a cathode component, particularly in the Hall-Héroult process. The wettability towards liquid aluminium, indicated by the low contact angle with liquid aluminium further allows wetting of the cathode component when used in an electrolytic aluminium production cell. The dislosed cathode component comprising the composite material thus provides a functional cathode component that allows for the reduction of the distance between the anode and the cathode in for example the Hall-Héroult process, which is advantageous.

According to some embodiments, the cathode component is in the form of a tile having one of a rectangular, a square, a hexagonal, or a circular shape, or wherein the cathode component is in the form of one of a cylinder, a bar, a tube, a bolt, a block, a ball, a pyramid, a grid, or a porous foam. The cathode component may thus be provided in different forms based on different requirements of the electrolytic aluminium production cell in which it is to be used, providing a versatile cathode component.

According to some embodiments, the cathode component has a thickness in the range of 1-25 mm, such as 3-20 mm, such as 5-15 mm, such as 6-10 mm.

According to some embodiments, the cathode component is fastenable by a fastener to a cathode or a substructure of the electrolytic aluminium production cell. In some embodiments, the cathode component comprises at least one of a drilled hole, a treaded hole, a blind hole, or a countersunk hole for fastening of the cathode component to a cathode or a substructure of the electrolytic aluminium production cell. This provides a cathode component which is easily fastened to an electrolytic aluminium production cell.

According to some embodiments, the cathode component comprises a compartment wherein a thermocouple is insertable for the purpose of in-situ temperature measurements when the cathode component is in use in the electrolytic aluminium production cell. The compartment may for example be a side hole into which a thermocouple can be embedded for the in-situ temperature sensing.

According to a second aspect, there is provided a electrolytic aluminium production cell comprising a cathode component as disclosed herein.

The electrolytic aluminium production cell may be advantagous in that it allows for the manufacturing of aluminum using less electric power compared to conventional aluminium production cells. This is due to the cathode component being wettable by aluminium, thereby reducing any sloshing of liquid aluminium which allows reducing the distance between the anode and the cathode of the electrolytic aluminium production cell.

According to some embodiments, the cathode component is fastened to a cathode or a substructure of the electrolytic aluminium production cell by means of one of a bolt, a screw, a pin, a strap, a clamp, an embedding, a snap-fit attachment, or a grout. This allows for an efficient fastening of the cathode component in the electrolytic aluminium production cell, facilitating mounting of the electrolytic aluminium production cell. Providing a cathode component which is fastened to the cathode or a substructure of the electrolytic aluminium production cell by a bolt, a screw, a pin, a strap, a clamp, an embedding, or a snap-fit attachment further allows removing the cathode component from the cathode or substructure if needed. This is advantageous considering that electrolytic cells typically are re-fitted every few years. In this regard, a further advantage with the cathode component is that, according to some embodiments, the cathode component is recycleable. That is, after use in an electrolytic aluminium procution cell, the cathode component may be removed from the procution cell, pulverized, and produced anew, thus providing a recyclable cathode component.

In an embodiment wherein the cathode component is fastened to the cathode or substructure of the electrolytic aluminium production cell by means of a grout, the grout is of the same composition as the cathode component. In addition to the fastening of the cathode component to the electrolytic aluminium production cell by means of the grout, the grout further allows joining a plurality of cathode components together to form a continuous and uninterrupted surface or body comprising a plurality of cathode components. This is advantageous in that it allows for an efficient arrangement of a plurality of cathode components in an electrolytic aluminium production cell. It is further advantageous in that it allows for efficiently forming a large cathode component, particularly suitable for the Hall-Héroult process for which, typically, cell surfaces can cover surfaces of 12 metres by 4 metres.

According to a third aspect, there is provided a method for producing a cathode component for an electrolytic aluminium production cell, the cathode component comprising a composite material comprising agglomerates, forming a matrix, and aluminium, said agglomerates comprising particulates of titanium diboride (TiB₂) and particulates of aluminium nitride (AIN), said composite material further comprising pores such to allow the cathode component to be infiltrated by molten aluminium, wherein the method comprises the steps of mixing precursor reagents comprising powder particles of Ti, B, BN, Al, and TiB₂ to obtain a reaction mixture; pressing the reaction mixture into a desired shape to create a reaction body; optionally drying the reaction body; and, uniformly heating the reaction body under inert atmosphere to ignite a self-sustaining exothermic reaction which propagates through the reaction body, thereby obtaining the cathode component.

By using precursor reagents comprising powder particles of Ti, B, BN, Al, and TiB₂, a stable exothermic reaction forming the cathode component is provided. Making solid objects of TiB₂ is known to be challenging due to the reaction of titanium and boron to form TiB₂ being extremely exothermic and explosive. The inventors quite surprisingly found that by using TiB₂ powder particles as one of the precursor reagents, the TiB₂ powder particles act as a diluent that absorbs some of the exothermic heat of the reaction, thereby making the reaction less exothermic and more manageable.

The use of BN as precursor reagent was observed to have a similar effect, thus making the reaction more stable. The use of BN as precursor reagent is further advantageous in that it provides a source of boron atoms for the TiB₂ to be formed, and also nitrogen atoms for the forming of AIN in the product. As described with reference to the first aspect, the AIN particulates act as a binder for the TiB₂ particulates of the cathode component, providing structural stability to the cathode component.

By uniformly heating the reaction body under inert atmosphere to ignite a self-sustaining exothermic reaction which propagates through the reaction body to obtain the cathode component, an efficient method of producing the cathode component is provided, allowing a high production rate of cathode components. The method including the self-sustaining exothermic reaction, stabilized by the identified precursor reagents, further allows producing cathode components of varying geometries and sizes. Thereby, the inventors have found a method for producing a cathode component as disclosed herein that is safe, scalable, and cost-efficient.

Optionally, prior to the step of pressing the reaction body into a desired shape, the method may further include the step of adding an aqueous sodium silicate to the reaction mixture obtained, thereby obtaining a reaction mixture paste which can be pressed into a desired shape to create the reaction body.

According to an embodiment, the self-sustaining exothermic reaction is in accordance with the following chemical reaction:

Ti + B + BN + (1+x)AI + yTiB₂ → (1+*y*)TiB₂ + AIN + xAl + Heat

wherein x may be in the range of from 0.1 to 1.0, preferably 0.33, and y may be in the range of from 0.1 to 1.0, preferably of 0.5. This provides a stable yet exothermic reaction, allowing production of the desired composition of the cathode component.

According to an embodiment, the method further includes using powder particles of a Ti64 alloy as a precursor reagent. The particle size of the precursor reagents may be in the range of 1-150 µm, preferably in the range of 20-100 µm.

The ratio between precursor reagents in the disclosed reaction is balanced so as to result in a cathode component with desired properties for use in the Hall-Héroult process, as disclosed herein, while limiting the rate at which the self-sustaining exothermic reaction propagates throughout the reaction body.

In an embodiment, the self-sustaining exothermic reaction propagates through the reaction body at a speed of less than 15 mm/s, preferably less than 10 mm/s. This provides a stable and repeatable reaction. This further allows producing larger components without a risk of explosion of the reaction body during the reaction. The stable reaction provides a cathode component with good shape retention, without large cracks, unreacted areas, flakiness, or corners of a component peeling upwards, for example. Thus, the method produces a cathode component that is uniform in terms of shape, internal structure, and chemical composition.

In an embodiment, the adiabatic temperature of the self-sustaining exothermic reaction is in the range of 1500-3000 °C.

According to some embodiments, the step of heating the reaction body may be carried out by means of vacuum induction melting, a focused laser, or an electron beam. This allows heating the reaction body uniformly and under an inert atmosphere, enabling a stable reaction.

According to an embodiment, the method further comprises the step of subjecting the cathode component obtained to melt infiltration in molten aluminium, such to fill the pores of the cathode component at least partly with aluminium. This allows pre-wetting of the cathode component by aluminium before it is arranged in an electrolytic aluminium production cell, and to thereby provide an aluminium wetted cathode component highly suitable as a cathode material for the Hall-Héroult process.

Effects and features of the second and third aspects are largely analogous to those described above in connection with the first aspect. Embodiments mentioned in relation to the first aspect are largely compatible with the second and third aspects. It is further noted that the inventive concepts relate to all possible combinations of features unless explicitly stated otherwise.

A further scope of applicability of the present invention disclosure will become apparent from the detailed description given below. However, it should be understood that the detailed description and specific examples, while indicating preferred embodiments of the inventiondisclosure, are given by way of illustration only, since various changes and modifications within the scope of the invention disclosure will become apparent to those skilled in the art from this detailed description.

Hence, it is to be understood that this invention disclosure is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

The disclosure will by way of example be described in more detail with reference to the appended drawings, which show presently preferred embodiments of the disclosure.
Figure 1 shows a schematic view of an electrolytic aluminium production cell according to prior art.
Figure 2 shows a schematic view of an electrolytic aluminium production cell according to an embodiment of the present disclosure.
Figures 3A-C show schematic perspective views of cathode components according to embodiments of the present disclosure.
Figure 4 shows a schematic perspective view of a cathode component according to an embodiment of the present disclosure.
Figures 5-8 show schematic perspective views of different arrangements of a plurality of cathode components fastened to cathodes or to substructures of an electrolytic aluminium production cell according to embodiments of the present disclosure.
Figure 9 shows a micrograph of a cathode component according to an embodiment of the present disclosure.
Figures 10A-C show photographs of cross-sectioned cathode components in aluminium after testing in molten aluminium for 1 week, 1 month, and 3 months, respectively.
Figures 11A-B show micrographs of the top surface and bottom surfaces, respectively, of the cathode component of Fig. 10B.
Figures 12A-B show micrographs of the top surface and bottom surfaces, respectively, of the cathode component of Fig. 10C
Figures 13A-C show images of test results from tests carried out on the cathode component of Fig. 10C.

### Detailed description

The present disclosure will now be described more fully hereinafter with reference to the accompanying drawings, in which currently preferred embodiments of the disclosure are shown. This disclosure may, however, be embodied in many different forms and should not be construed as limited to the embodiments set forth herein; rather, these embodiments are provided for thoroughness and completeness, and to fully convey the scope of the disclosure to the skilled person.

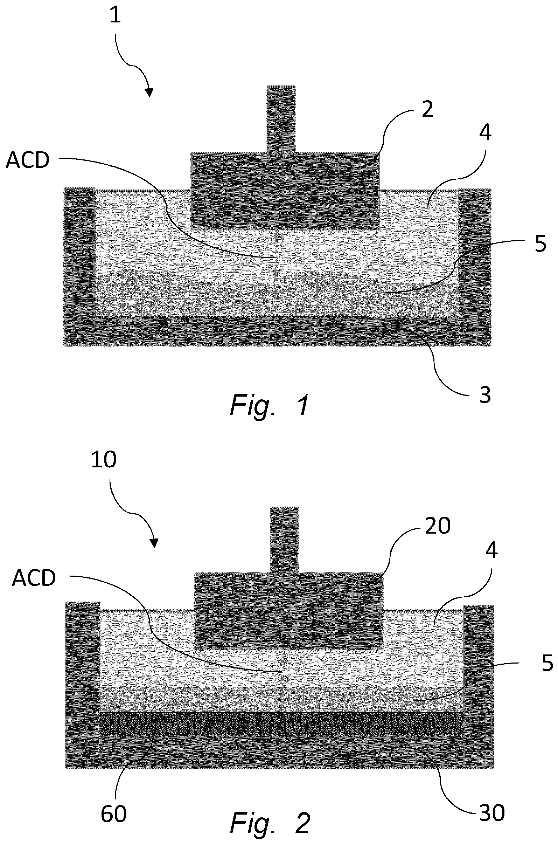

Figure 1 shows a schematic view of a prior art electrolytic aluminium production cell 1 during use. The production cell 1 comprises an anode 2, a graphite cathode 3, molten cryolite 4 and liquid aluminium 5. The distance between the anode 2 and the cathode 3, also referred to as the anode-cathode distance (ACD), of the prior art production cell 1 is here around 5-10 cm. Due to the low wettability of graphite towards molten aluminium, a magneto-hydrodynamic movement is induced in the liquid aluminium which in turn may lead to sloshing of the same. The ACD is adjusted to 5-10 cm such to avoid short-circuiting in the production cell 1 as a result of the movement and sloshing of the liquid aluminium 5.

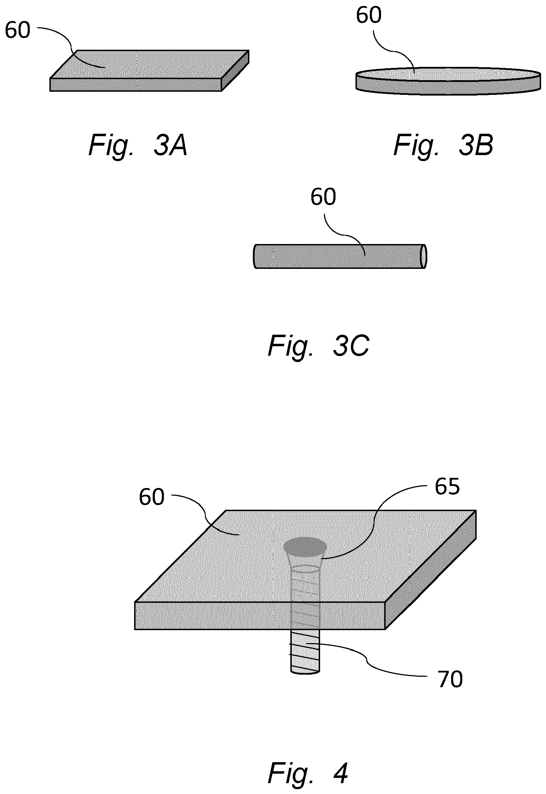

Figure 2 shows a schematic view of an electrolytic aluminium production cell 10 according to an embodiment of the present disclosure, during use. Here, the electrolytic aluminium production cell comprises an anode 20, a graphite cathode 30, molten cryolite 4, liquid aluminium 5, and a cathode component 60 as described herein. The cathode component 60 is arranged horizontally inside the electrolytic aluminium production cell 10 on the cathode 30 at the bottom of the electrolytic aluminium production cell 10. The cathode component 60 is in this exemplifying embodiment in the form of a tile, as shown in Figure 3A. The cathode component may, however, be provided in other forms, such as in the form of a disc as shown in Figure 3B, or in the form of a cylinder as shown in Figure 3C. Providing the cathode component 60 in other shapes is also conceivable within the concept of the present disclosure, as has been discussed previously.

The cathode component 60 is fastenable to the cathode 30 by a fastener. With reference to Fig. 4, an exemplifying embodiment of the cathode component 60 is shown wherein the cathode component 60 comprises a countersunk hole 65 for receiving and entering into engagement with a threaded graphite bolt 70 which may be attached to the base of the electrolytic aluminium production cell, i.e. the cathode 30. The cathode component 60 may, in other embodiments, comprise another type of fastener engaging portion, such as but not limited to a drilled hole, a threaded hole, a blind hole etc.

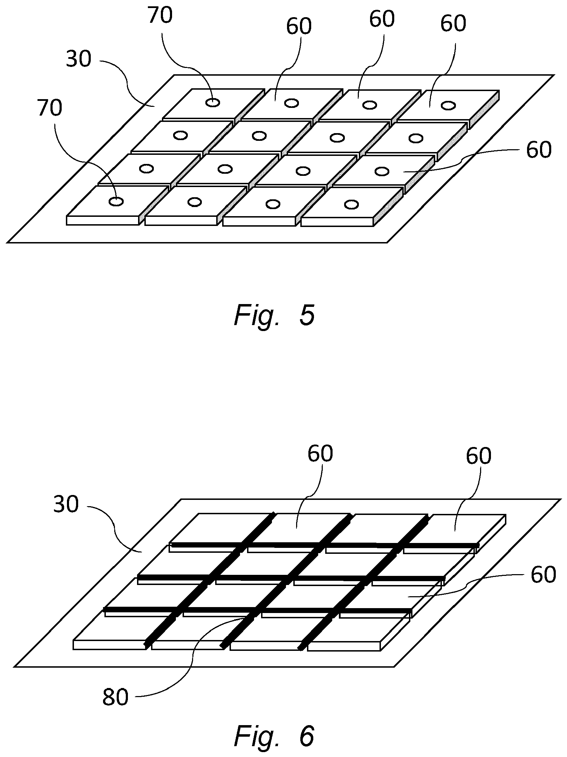

With reference to Figure 5, the cathode component 60 may be provided at the cathode 30 the electrolytic aluminium production cell 10 in an arrangement comprising a plurality of cathode components 60 fastened to the cathode 30. In this exemplifying embodiment, the cathode components 60 are fastened to the cathode 30 by a graphite bolt 70.

In another embodiment, shown in Figure 6, an arrangement comprising a plurality of cathode components 60 is provided in which the cathode components 60 are fastened to the cathode 30 by a grout 80. In this embodiment, the cathode components 60 are arranged at the cathode 30, or at another substructure of the electrolytic aluminium production cell 10, with a gap between each cathode component 60. A grout 80 is then positioned in the gap between the cathode components 60. When the grout 80 hardens, the cathode components 60 are fixed to the cathode 30. The inventors surprisingly found that the composite material of the cathode component may be obtained in the form of a grout by adding an aqueous sodium silicate (Na₂SiO_{3(aq)}) to the mixed reactant powders. The obtained mixture is in the form of a putty-like paste and can be moulded by hand or squeezed out of a grout gun to fill the gaps between the cathode components 60. Upon drying and hardening, the grout 80 may be ignited using a heat source such as a locally placed induction coil, preferably under a protective atmosphere such as of argon gas. The ignition generates a combustion synthesis which will result in the grout 80 forming a composite material with the same composition as the cathode components 60. This provides a seamless surface of the arrangement of cathode components 60, free of gaps there between. In view of the present disclosure, a skilled person would understand that a combined use of a grout and a fastening member such as a bolt may be used to fasten the cathode component 60 to the cathode 30, or other substructure of the electrolytic aluminium production cell 10.

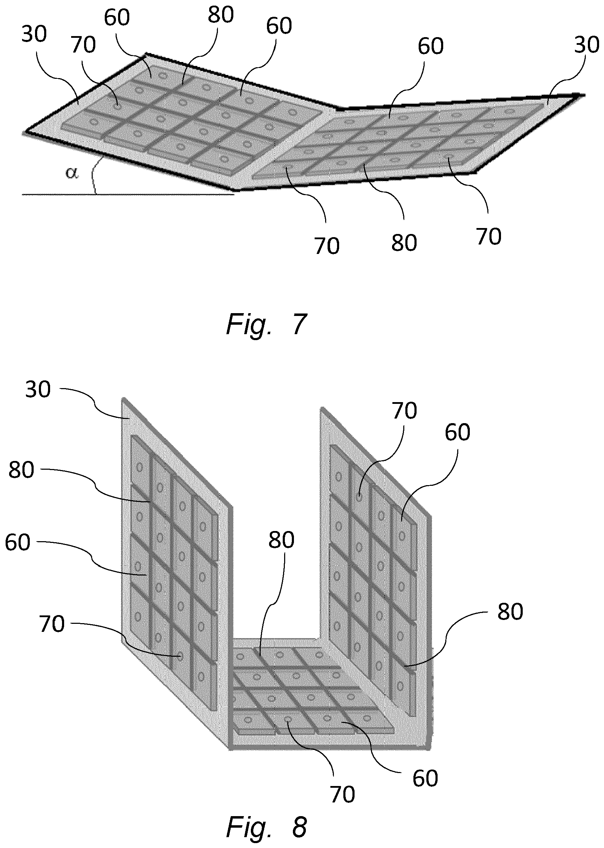

Cathode component arrangements may be provided in different setups in the electrolytic aluminium production cell, different from the embodiment described with reference to Figure 2, where it is arranged horizontally at the base of the electrolytic aluminium production cell 10. For example, with reference to Figure 7, the arrangement of cathode components may be an angled arrangement (e.g. for a drained cell design) or, with reference to Figure 8, a vertical-horizontal arrangement. Thus, an arrangement comprising a plurality of cathode components 60 fastened to a cathode or a substructure of the electrolytic aluminium production cell may be provided in different setups. Providing for example a vertical setup or an arrangement of cathode components 60 is thus, also conceivable within the concept of the present disclosure.

The cathode component 60 is wettable by the liquid aluminium 5, as shown in the subsequent examples, which prevents magneto-hydrodynamic movement from being induced in the liquid aluminium 5 and therefore, the ACD of the electrolytic aluminium production cell 10 is reduced with respect to the prior art electrolytic aluminium production cell 1 described with reference to Figure 1. That is, the ACD in the exemplifying embodiment described with reference to Figure 2 is less than 5 cm. Further, in this embodiment, the anode 20 may be a conventional graphite anode. However, in a particularly preferable embodiment of the electrolytic aluminium production cell 10, the anode 20 is an inert anode as described in EP3839084.

### Examples

Three cathode components were produced by an exothermic self-sustaining exothermic reaction, also referred to as combustion synthesis. For each cathode component, powder particles of precursor reagents comprising Ti, B, BN, Al, and TiB₂ were mixed to obtain a reaction mixture, the reaction mixture was then cold pressed in a mould to create a block-shaped reaction body. The reaction body was then heated by vacuum induction melting to ignite the self-sustaining exothermic reaction that propagated through the reaction body according to the following chemical reaction:

Ti + B + BN + 1.33AI +0.5*y*TiB₂ → 1.5TiB₂ + AIN + 0.33AI + Exothermic Heat

thereby obtaining the cathode component.

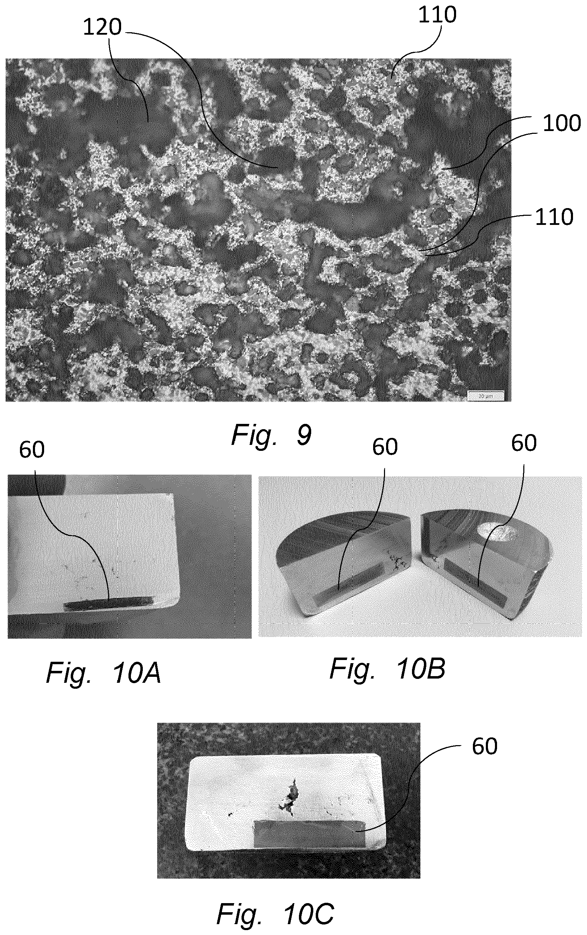

Figure 9 shows a micrograph of one of the obtained cathode components, representative of the three cathode components. The micrograph was taken after having polished the surface of the cathode component and etched it with Weck's reagent. In the micrograph, micron-sized agglomerates of TiB₂ are seen as white reflective particles 100, micron-sized agglomerates of aluminium nitride are seen as a grey phase 110 in intimate contact with the TiB₂ particles, and excess aluminium and pores are seen as a dark phase 120.

### Tests of cathode components in liquid aluminium of a temperature of 960 °C

The three cathode components were immersed in molten aluminium (5056 Al alloy) at a temperature of 960 °C and held for 1 week, 1 month, and 3 months, respectively. Figures 10A-C show images of the cathode component in the aluminium ingot, cross-sectioned, obtained after testing for 1 week (Figure 10A), 1 month (Figure 10B), and 3 months (Figure 10C). It can be seen that in all tests, the cathode component sinks to the bottom of the aluminium pool and is wetted by aluminium on all surfaces. There are no signs of degradation of the cathode component. The composition of the surrounding aluminium was measured by means of an XRF spectrometer, revealing that there was no measurable pickup of elements from the cathode component such as Ti, V, Zr, or B. The electrical conductivity of the cathode component was measured by eddy current sensing, showing that it was on a comparable level to the surrounding aluminium.

### Results after 1 month of testing

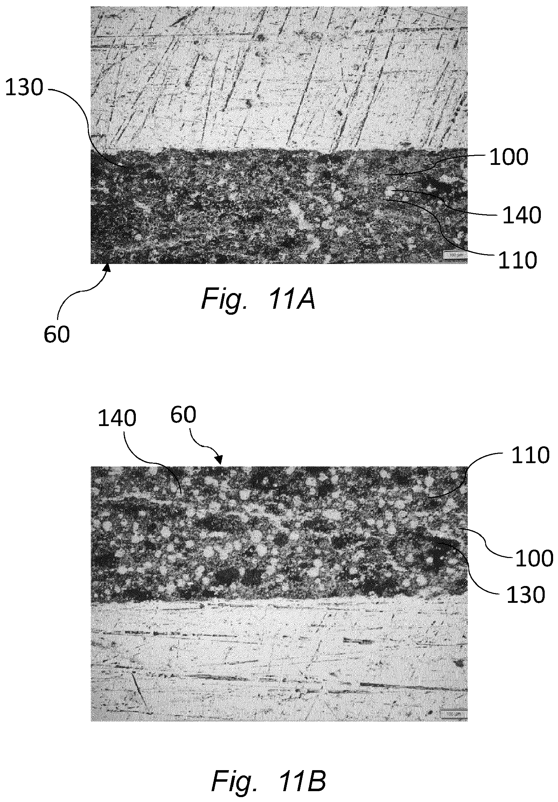

A sample of the cathode component in aluminium obtained after 1 month of testing was cross-sectioned and prepared for optical microscopy by surface polishing. Figure 11A shows a micrograph of the top surface of the cathode component 60 of Figure 10B. Figure 11B shows a micrograph of the bottom surface of the cathode component 60 of Figure 10B. The micrographs show that the cathode component 60 is in perfect wetted contact with the aluminium and that it has been melt infiltrated by aluminium 140, i.e. the infiltrated aluminium 140 has filled up what used to be a pore. The infiltrated aluminium 140 is seen as the light circles in Figures 11A-B. The micrographs show that the microstructure of the cathode component 60 comprise agglomerates forming a matrix comprising particulates of TiB₂ 100 and AIN 110. The cathode component 60 further comprises metallic aluminium 130. No signs of chemical degradation of the cathode component 60 is observed.

### Results after 3 months of testing

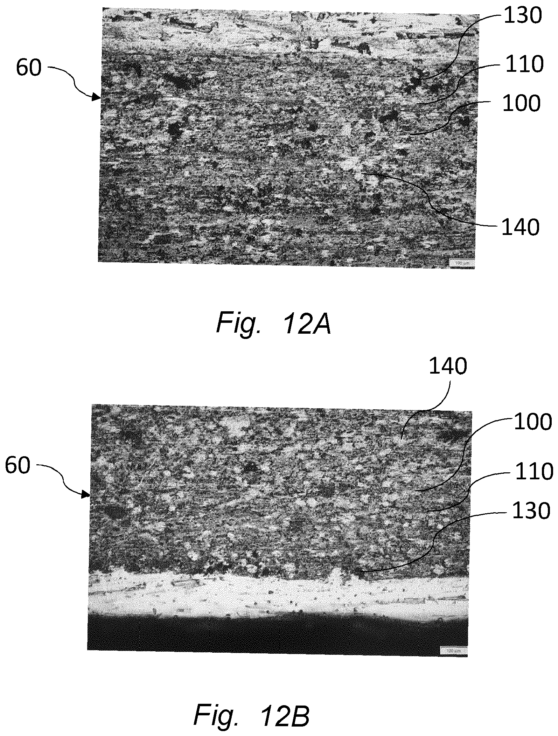

A sample of the cathode component in aluminium obtained after 3 months of testing was cross-sectioned and prepared for optical microscopy by surface polishing and etching. Figure 12A shows a micrograph of the top surface of the cathode component 60 of Figure 10C. Figure 12B shows a micrograph of the bottom surface of the cathode component 60 of Figure 10C. The micrographs show that the cathode component 60 is in perfect wetted contact with the aluminium and that it has been melt infiltrated by aluminium 140. That is, the infiltrated aluminium 140 has filled up what used to be a pore. The infiltrated aluminium 140 is seen as the light circles in Figures 12A-B. The micrographs show that the microstructure of the cathode component 60 comprise agglomerates forming a matrix comprising particulates of TiB₂ 100 and AIN 120. The cathode component 60 further comprises metallic aluminium 130. No signs of chemical degradation of the cathode component 60 is observed.

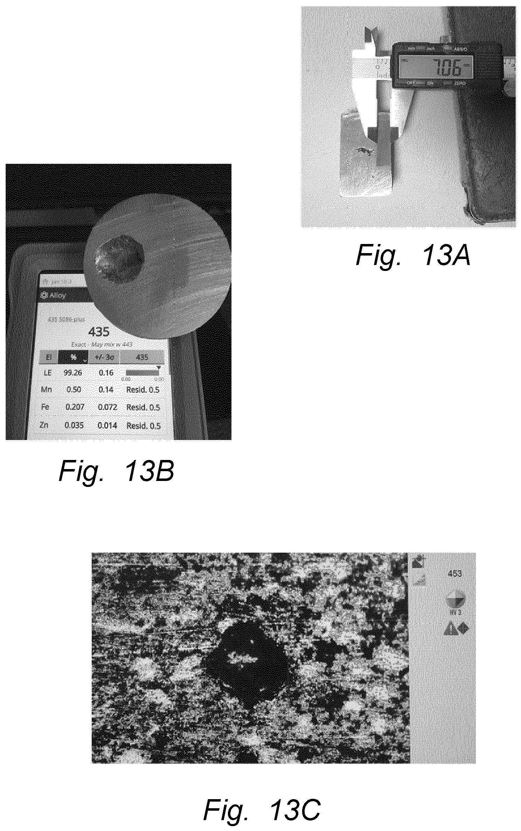

Further, with reference to Figure 13A, the thickness of the cathode component 60 in the aluminium was measured, showing that the initial thickness of the cathode component 60 was maintained at 7 mm after 3 months of testing. Thus, no measurable degradation of the cathode component 60 was detected.

With reference to Figure 13B, an XRF measurement of the aluminium surrounding the cathode component 60 was measured, revealing no pickup of Ti, V, Zr or B in the top part of the sample ingot. This was an indication that no corrosion of the cathode component 60 took place during the test. The aluminium had the same chemical composition as at the start of the test. Thus, it can be concluded that the cathode component 60 is insoluble in the molten aluminium.

Finally, with reference to Figure 13C, the hardness of the cathode component 60 was measured by means of a Vickers hardness indent test. The hardness of the cathode component 60 was measured to 450 HV, indicating a well-bonded nature of the composite material of the cathode component 60. No cracks associated with the corners of the indent were observed, further indicating that the material of the cathode component 60 is not brittle.

Thus, it has been shown that cathode components as described herein are capable of withstanding molten aluminium for more than 3 months without presenting corrosion or other degradation, and that it is perfectly wetted by molten aluminium.

The person skilled in the art realizes that the present disclosure by no means is limited to the preferred embodiments and examples described above. On the contrary, many modifications and variations are possible within the scope of the appended claims.

Additionally, variations to the disclosed embodiments can be understood and effected by the skilled person in practicing the claimed disclosure, from a study of the drawings, the disclosure, and the appended claims.

### Abbreviations

Herein, the respective elements are referred to by their symbol in the periodic table.

## Claims

1. A cathode component for an electrolytic aluminium production cell, the cathode component comprising a composite material comprising agglomerates, forming a matrix, and aluminium, wherein the agglomerates comprise particulates of titanium diboride (TiB₂) and particulates of aluminium nitride (AIN), the composite material further comprising pores such to allow the cathode component to be infiltrated by molten aluminium, e.g. prior to or during its use in said electrolytic aluminium production cell.

2. The cathode component according to claim 1, wherein the particulates of TiB₂ and the particulates of AIN are in intimate contact.

3. The cathode component according to claim 1 or 2, wherein the composite material further comprises vanadium, wherein the vanadium is dissolved into the particulates of TiB₂ or present as particulates of vanadium diboride (VB₂) in intimate contact with the particulates of AIN.

4. The cathode component according to claim 1 or 2, wherein the composite material comprises (in wt% of said composite material)
TiB₂ in an amount of 50-75 wt%, preferably of 68 wt%;
AIN in an amount of 15-40 wt%, preferably of 26 wt%; and
aluminium in an amount of 2-10 wt%, preferably of 6 wt%.

5. The cathode component according to claim 3, wherein the composite material comprises (in wt% of said composite material)
TiB₂ in an amount of 50-75 wt%, preferably of 65 wt%;
VB₂ in an amount of 1-5 wt%, preferably of 3 wt%;
AIN in an amount of 15-40 wt%, preferably of 26 wt%; and
aluminium in an amount of 2-10 wt%, preferably of 6 wt%.

6. The cathode component according to any one of the preceding claims,
wherein particulates have a crystallite size of 0.1- 20 µm, preferably 0.5-5 µm.

7. The cathode component according to any one of the preceding claims,
wherein at a temperature of 800-1000 °C, the composite material has a density of from 2 g/cm³, an electrical conductivity of from 10⁵ S/m, a thermal conductivity of from 25 W/mK, a degradation rate in liquid aluminium of less than 5 mm/year, a contact angle with liquid aluminium of less than 90 °, a solubility in liquid aluminium of less than 0.05 wt% Ti, and a hardness of from 300 HV.

8. The cathode component according to any one of the preceding claims,
wherein the cathode component is in the form of a tile having one of a rectangular, a square, a hexagonal, or a circular shape, or wherein the cathode component is in the form of one of a cylinder, a bar, a tube, a bolt, a block, a ball, a pyramid, a grid, or a porous foam.

9. The cathode component according to any one of the preceding claims,
wherein the thickness of the cathode component is in the range of 1-25 mm.

10. The cathode component according to any one of the preceding claims,
wherein the cathode component is fastenable by a fastener to a cathode or a substructure of the electrolytic aluminium production cell.

11. The cathode component according to claim 10, wherein the component comprises at least one of a drilled hole, a treaded hole, a blind hole, and a countersunk hole for fastening of the cathode component to a cathode or a substructure of the electrolytic aluminium production cell.

12. The cathode component according to any one of the preceding claims,
wherein the cathode component comprises a compartment wherein a thermocouple is insertable for the purpose of in-situ temperature measurements when the cathode component is in use in the electrolytic aluminium production cell.

13. An electrolytic aluminium production cell comprising a cathode component according to any one of the preceding claims.

14. The electrolytic aluminium production cell according to claim 13, wherein the cathode component is fastened to a cathode or a substructure of the electrolytic aluminium production cell by means of one of a bolt, a screw, a pin, a strap, a clamp, an embedding, a snap-fit attachment, or a grout.

15. The electrolytic aluminium production cell according to claim 14, wherein the cathode component is fastened to a cathode or a substructure of the electrolytic aluminium production cell by means of a grout, and wherein the grout has the same composition as the cathode component.

16. A method for producing a cathode component for an electrolytic aluminium production cell, the cathode component comprising a composite material comprising agglomerates, forming a matrix, and aluminium, said agglomerates comprising particulates of titanium diboride (TiB₂) and particulates of aluminium nitride (AIN), said composite material further comprising pores such to allow the cathode component to be infiltrated by molten aluminium, wherein the method comprises the steps of:
a) mixing precursor reagents comprising powder particles of Ti, B, BN, Al, and TiB₂ to obtain a reaction mixture;
b) pressing the reaction mixture into a desired shape to create a reaction body;
c) optionally drying the reaction body; and
d) uniformly heating the reaction body under inert atmosphere to ignite a self-sustaining exothermic reaction which propagates through the reaction body, thereby obtaining the cathode component.

17. The method according to claim 16, wherein the self-sustaining exothermic reaction of step d) is in accordance with the following chemical reaction:
Ti + B + BN + (1+x)AI + *y*TiB₂ → (1+*y*)TiB₂ + AIN + xAl + Exothermic Heat
wherein x is in the range of from 0.1 to 1.0, preferably 0.33, and y is in the range of from 0.1 to 1.0, preferably of 0.5.

18. The method according to claim 16 or 17, wherein powder particles of a Ti-6AI-4V (Ti64) alloy is used as a precursor reagent.

19. The method according to any one of claims 16-18, wherein the adiabatic temperature of the self-sustaining exothermic reaction of step d) is in the range of 1500-3000 °C.

20. The method according to any one of claims 16-19, wherein the self-sustaining exothermic reaction propagates through the reaction body at a speed of less than 15 mm/s, preferably less than 10 mm/s.

21. The method according to any one of claims 16-20, wherein step of heating the reaction body is carried out by means of vacuum induction melting, a focused laser, or an electron beam.

22. The method according to any one of claims 16-21, further comprising a step of subjecting the cathode component obtained in step d) to melt infiltration in molten aluminium, such to fill the pores of the cathode component at least partly with aluminium.

23. The method according to any one of claims 16-22, further comprising the step of adding an aqueous sodium silicate (Na₂SiO_{3(aq)}) to the reaction mixture obtained in step a), thereby obtaining a reaction mixture paste which can be pressed into a desired shape to create the reaction body.

24. The method according to any one of claims 16-23, wherein the particle size of the precursor reagents is in the range of 1-150 µm.
